# EUROPEAN PATENT SPECIFICATION

(11) **EP 4 322 078 B1**
(45) Date of publication and mention of the grant of the patent: **31.12.2025**
(21) Application number: 22795548.1
(22) Date of filing: 07.04.2022
(51) Int. Cl.: G06F 9/50, G06Q 50/50, G06Q 50/40, G06Q 10/06

(54) **MANAGEMENT SYSTEM, AND MANAGEMENT METHOD**
VERWALTUNGSSYSTEM UND VERWALTUNGSVERFAHREN
SYSTÈME DE GESTION ET PROCÉDÉ DE GESTION

(30) Priority: 30.04.2021 JP 2021077881
(43) Date of publication of application: 14.02.2024
(73) Proprietor: MAZDA MOTOR CORPORATION, Hiroshima 730-8670 (JP)
(72) Inventor: OKAMURA Masashi, Aki-gun, Hiroshima 730-8670 (JP); ITO Seiichi, Aki-gun, Hiroshima 730-8670 (JP); MAEDA Takashi, Aki-gun, Hiroshima 730-8670 (JP); ADACHI Tomohiko, Aki-gun, Hiroshima 730-8670 (JP); YOSHIOKA Masahiro, Aki-gun, Hiroshima 730-8670 (JP); ISHIBASHI Masato, Aki-gun, Hiroshima 730-8670 (JP); HAMANO Daisuke, Aki-gun, Hiroshima 730-8670 (JP)
(74) Representative: Müller-Boré & Partner Patentanwälte PartG mbB
(86) International application number: PCT/JP2022/017289
(87) International publication number: WO 2022/230632

(56) References cited:
- JP-A- 2004 362 149
- JP-A- 2005 135 209
- JP-A- 2005 208 923
- US-A1- 2015 256 612
- US-A1- 2017 228 258
- US-A1- 2020 019 445
- US-A1- 2020 099 739

## Description

### TECHNICAL FIELD

The technology disclosed herein relates to management of grid computing.

### BACKGROUND ART

Document JP 2020-160661 A discloses a system including a plurality of communication devices and a management server that manages grid computing. The management server includes a signal receiver, a state determiner, and a response transmitter. The signal receiver receives a signal indicating that a communication device can participate in grid computing from the communication device. The state determiner determines an insufficient state of a processing capability of each of the plurality of processing devices on the basis of a usage status of a calculation resource of each of the plurality of processing devices. In a case where the processing capability of at least one of the plurality of processing devices is insufficient, the response transmitter transmits a participation instruction to the grid computing to the communication device on the basis of the signal. Such a configuration allows effective utilization of the calculation resources of the plurality of communication devices.

### Citation List

### Patent Literature

Document US 2017/228258 A1 describes a method that comprises: receiving by a device present at a mobile environment, data relating to a computerized task; obtaining information related to a future state of the device or the mobile environment or another device within the mobile environment; determining indications for resource availability associated with the future state; determining a scheme for performing at least part of the computerized task offsite, in accordance with the resource availability; and transmitting data over a communication channel to a remote computing platform for performing the at least part of the computerized task offsite, in accordance with the scheme.

Document US 2020/099739 A1 describes apparatuses, systems, and methods related to sharing a memory resource among physically remote entities. A system sharing a memory resource among physically remote entities may enable performance of functions, including automated functions critical for prevention of damage to a product, personnel safety, and/or reliable operation, based on increased access to data that may improve performance of a mission profile. One exemplary apparatus includes a first vehicle configured to determine an availability of processing resources or memory capacity, or both, at the first vehicle based at least in part on a current operating mode of the first vehicle, receive a request from a second vehicle to use at least a portion of the processing resources or the memory capacity, or both, to perform a processing operation at a second vehicle, wherein the request from the second vehicle is associated with insufficient processing capability or memory capacity, or both, at the second vehicle, and perform at least a portion of the processing operation or allow access to the available memory capacity, or both, at the first vehicle in response to the request and based at least in part on determining the availability of the processing resources or the memory capacity, or both.

Document US 2020/019445 A1 describes a method for managing computational tasks in vehicle context comprising the steps of receiving a computational task; determining a processing resource requirement of the computational task; determining available processing resources of a first temporal vehicular virtual server (TVVS) at a first timestamp, the first TVVS comprising first participant vehicles proximally located relative to one another on a road segment at the first timestamp; determining vehicle movement data of the first participant vehicles; estimating available processing resources of the first TVVS at a second timestamp subsequent to the first timestamp based on the vehicle movement data of the first participant vehicles; determining to execute the computational task on the first TVVS based on the processing resource requirement of the computation task, the available processing resources of the first TVVS at the first timestamp, and the estimated available processing resources of the first TVVS at the second timestamp; and assigning the computational task to the first TVVS to execute the computational task.

Document JP 2020-160661 A does not disclose how to provide a client with a calculation capability of the grid computing.

### SUMMARY OF THE INVENTION

### Technical problem

The technology disclosed herein has been made in view of such a point, and an object of the technology is to provide a client with a calculation capability of grid computing.

### Solution to problem

The claimed invention is defined by the features set forth in the appended independent claims. Additional embodiments of the claimed invention are defined by the dependent claims.

According to the claimed invention, it is possible to provide the client with the calculation capability of grid computing.

In the management system, in the matching processing, the controller may allocate, to the job data, the arithmetic device that is available in the grid computing processing among the plurality of arithmetic devices and has performance corresponding to a calculation type of the job data.

The above configuration allows the arithmetic device to be appropriately allocated to the job data in accordance with the calculation type of the job data.

In the management system, in the matching processing, the controller may allocate, to the job data, the arithmetic device that is available in the grid computing processing among the plurality of arithmetic devices and has performance corresponding to an execution condition of the job data.

The above configuration allows the arithmetic device to be appropriately allocated to the job data in accordance with the execution condition of the job data.

In the management system, in the matching processing, the controller may allocate, to the job data, the arithmetic device that is available in the grid computing processing among the plurality of arithmetic devices so that the grid computing processing on the job data is completed until a delivery date set for the job data.

The above configuration allows the arithmetic device to be appropriately allocated to the job data in accordance with the delivery date of the job data.

### Advantageous effect of invention

The technology disclosed herein makes it possible to provide the client with the calculation capability of the grid computing.

### BRIEF DESCRIPTION OF THE DRAWINGS

FIG. 1 is a schematic diagram exemplifying a configuration of a system according to an embodiment;
FIG. 2 is a conceptual diagram for describing grid computing;
FIG. 3 is a block diagram exemplifying a configuration of a vehicle;
FIG. 4 is a block diagram exemplifying a configuration of a user terminal;
FIG. 5 is a block diagram exemplifying a configuration of a client server;
FIG. 6 is a block diagram exemplifying a configuration of a facility server;
FIG. 7 is a block diagram exemplifying a configuration of a management server;
FIG. 8 is a flowchart exemplifying job acceptance processing;
FIG. 9 is a schematic diagram exemplifying an image of a job acceptance screen;
FIG. 10 is a flowchart exemplifying prediction processing;
FIG. 11 is a flowchart exemplifying matching processing;
FIG. 12 is a flowchart exemplifying grid computing processing; and
FIG. 13 is a schematic diagram exemplifying an image of a confirmation screen.

### DETAILED DESCRIPTION

Hereinafter, an embodiment will be described in detail with reference to the drawings. In the drawings, the same or corresponding parts are denoted by the same reference signs, and the description thereof will not be repeated.

### (System)

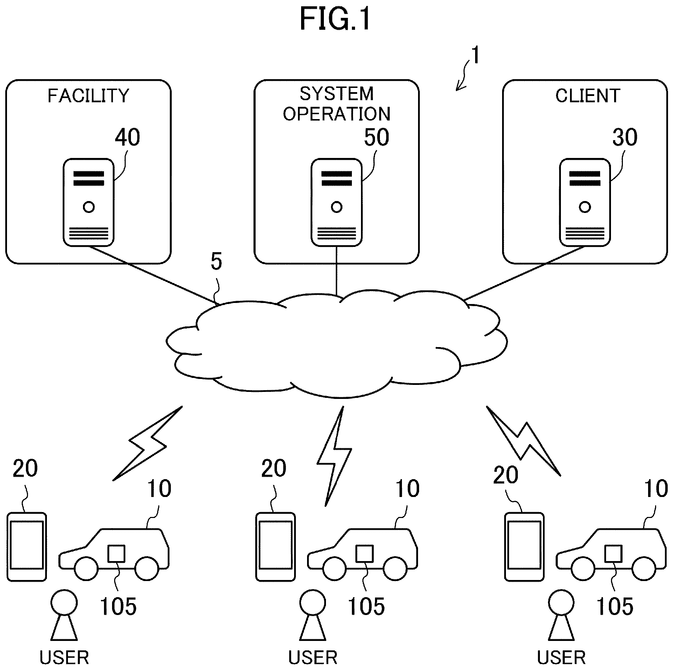

FIG. 1 is a schematic diagram exemplifying a configuration of a system 1 according to the embodiment. The system 1 includes a plurality of vehicles 10, a plurality of user terminals 20, a client server 30, a facility server 40, and a management server 50. These components can communicate with each other via a communication network 5. An arithmetic device 105 is mounted on each of the plurality of vehicles 10. Note that a plurality of client servers 30 may be provided in the system 1. Similarly, a plurality of facility servers 40 may be provided in the system 1.

### [Grid computing]

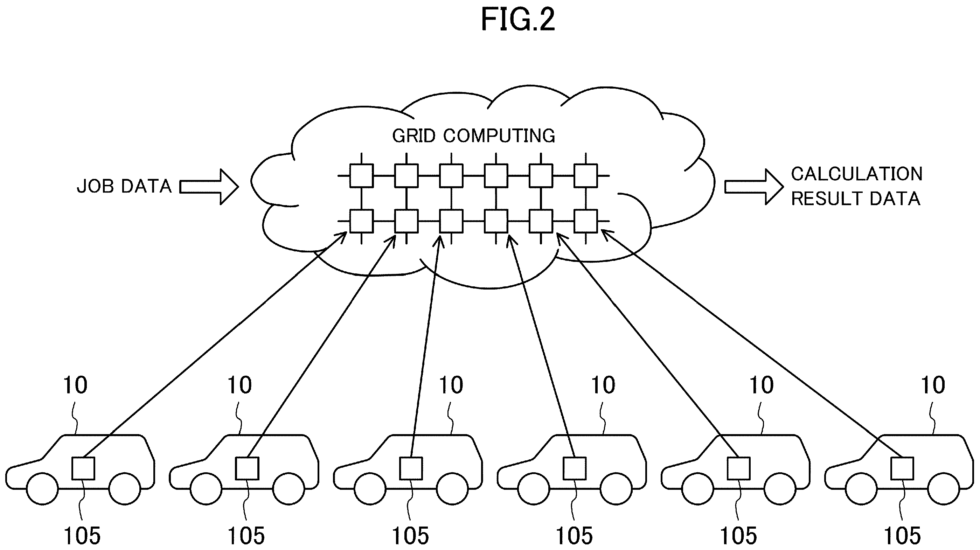

As illustrated in FIG. 2, in the system 1 according to the embodiment, grid computing is configured by a plurality of arithmetic devices 105, and grid computing processing of causing an available arithmetic device 105 among the plurality of arithmetic devices 105 to process job data is performed.

When a calculation capability of the arithmetic device 105 is required in the vehicle 10, the arithmetic device 105 enters an operating state, and the calculation capability of the arithmetic device 105 is used. For example, in a case where the vehicle 10 is traveling, the calculation capability of the arithmetic device 105 is required for travel control of the vehicle 10, and the arithmetic device 105 enters the operating state.

On the other hand, when a calculation capability of the arithmetic device 105 is not required in the vehicle 10, the arithmetic device 105 enters a stop state, and the calculation capability of the arithmetic device 105 is not used. For example, when the vehicle 10 is stopped and a power supply of the vehicle 10 is turned off, the calculation ability of the arithmetic device 105 is not required, and the arithmetic device 105 enters the stop state.

Here, in a case where the calculation capability of the arithmetic device 105 is not required in the vehicle 10, by providing the calculation capability of the arithmetic device 105 to the grid computing processing, the calculation capability of the arithmetic device 105 can be effectively used.

### [Vehicle]

The vehicle 10 is owned by a user. The user drives the vehicle 10. In this example, the vehicle 10 is a four-wheeled automobile. A battery (not shown) is mounted on the vehicle 10. The power of the battery is supplied to an in-vehicle device such as the arithmetic device 105. Examples of such a vehicle 10 include an electric vehicle and a plug-in hybrid vehicle.

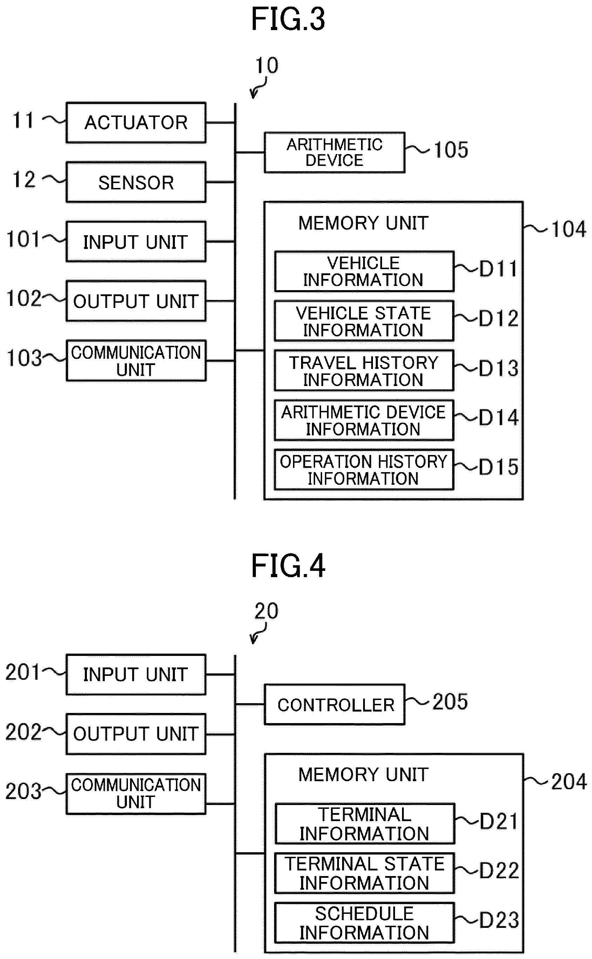

As illustrated in FIG. 3, the vehicle 10 includes an actuator 11, a sensor 12, an input unit 101, an output unit 102, a communication unit 103, a memory unit 104, and the arithmetic device 105.

The actuator 11 includes an actuator of a drive system, an actuator of a steering system, an actuator of a braking system, and the like. Examples of the actuator of the drive system include an engine, a transmission, and a motor. Examples of the actuator of the braking system include a brake. Examples of the actuator of the steering system include a steering.

The sensor 12 acquires various types of information used for controlling the vehicle 10. Examples of the sensor 12 include a vehicle exterior camera that images the outside of the vehicle, a vehicle interior camera that images the inside of the vehicle, a radar that detects an object outside the vehicle, a vehicle speed sensor, an acceleration sensor, a yaw rate sensor, an accelerator opening sensor, a steering sensor, and a brake hydraulic sensor.

The input unit 101 inputs information and data. Examples of the input unit 101 include an operation unit that inputs information according to an operation by being operated, a camera that inputs an image indicating information, and a microphone that inputs sound indicating information. Examples of the operation unit include an operation button and a touch sensor of a car navigation device. The information and data input to the input unit 101 are sent to the arithmetic device 105.

The output unit 102 outputs information and data. Examples of the output unit 102 include a display unit that outputs an image indicating information and a speaker that outputs sound indicating information. Examples of the display unit include a display of a car navigation device. Examples of the speaker include a speaker of a car navigation device.

The communication unit 103 transmits and receives information and data. The information and data received by the communication unit 103 are transmitted to the arithmetic device 105.

The memory unit 104 memorizes information and data.

The arithmetic device 105 controls each unit of the vehicle 10. In this example, the arithmetic device 105 controls the actuator 11 in accordance with various types of information obtained by the sensor 12.

The arithmetic device 105 includes a processor, a memory, and the like. Examples of the processor include a central processing unit (CPU) and a graphics processing unit (GPU). The memory memorizes a program for operating the processor, information and data indicating a processing result of the processor, and the like.

Note that the number of processors mounted on the arithmetic device 105 may be one or more. Furthermore, the processor mounted on the arithmetic device 105 may be only one of the CPU or the GPU, or may be both the CPU and the GPU. In this example, the arithmetic device 105 includes both the CPU and the GPU. For example, the arithmetic device 105 includes one or a plurality of electronic control units (ECUs).

In this example, the memory unit 104 memorizes vehicle information D11, vehicle state information D12, travel history information D13, arithmetic device information D14, and operation history information D15.

### <Vehicle information>

The vehicle information D11 is information related to the vehicle 10. For example, the vehicle information D11 includes a vehicle ID set for the vehicle 10, vehicle performance information indicating performance of the vehicle, and the like. The vehicle ID is an example of vehicle identification information for identifying the vehicle 10. The user ID is an example of user identification information for identifying the user.

### <Vehicle state information>

The vehicle state information D12 indicates a state of the vehicle 10. For example, the vehicle state information D12 includes vehicle position information, vehicle communication information, vehicle power supply information, vehicle battery remaining level information, vehicle charge information, and the like. The vehicle position information indicates a position (latitude and longitude) of the vehicle 10. For example, the vehicle position information can be acquired by a global positioning system (GPS). The vehicle communication information indicates a communication state of the vehicle 10. The vehicle power supply information indicates a state of the power supply of the vehicle 10. For example, the vehicle power supply information indicates on/off of an ignition power supply, on/off of an accessory power supply, and the like. The vehicle battery remaining level information indicates a remaining level of the battery (not shown) mounted on the vehicle 10. The vehicle charge information indicates whether the vehicle 10 is being charged in a charging facility (not shown).

### <Travel history information>

Travel history information D13 is information indicating a travel history of the vehicle 10. For example, the travel history information D13 indicates the position and time of the vehicle 10 in association with each other.

### <Arithmetic device information >

The arithmetic device information D14 is information related to the arithmetic device 105. For example, the arithmetic device information D14 includes an arithmetic device ID set for the arithmetic device 105, the vehicle ID set for the vehicle 10 on which the arithmetic device 105 is mounted, arithmetic device performance information indicating performance of the arithmetic device 105, and the like. The arithmetic device ID is an example of arithmetic device identification information for identifying the arithmetic device 105. The performance of the arithmetic device 105 indicated in the arithmetic device performance information includes a calculation capability indicating the calculation capability (specifically, a maximum calculation capability) of the arithmetic device 105, a ratio of the CPU and the GPU in the arithmetic device 105, and the like. For example, the calculation capability of the arithmetic device 105 is indicated by the number of arithmetic instructions that the arithmetic device 105 can process per unit time. A data volume that the arithmetic device 105 can calculate per unit time is determined in accordance with the number of arithmetic instructions that the arithmetic device 105 can process per unit time.

### <Operation history information>

The operation history information D15 is information indicating an operation history of the arithmetic device 105. For example, the operation history information D15 indicates a use rate of the calculation capability of the arithmetic device 105 and the time in association with each other.

### [User terminal]

The user terminal 20 is owned by the user. The user operates the user terminal 20 to use various functions. Furthermore, the user can carry the user terminal 20. Examples of such a user terminal 20 include a smartphone, a tablet, and a laptop personal computer.

As illustrated in FIG. 4, the user terminal 20 includes an input unit 201, an output unit 202, a communication unit 203, a memory unit 204, and a controller 205.

The input unit 201 inputs information and data. Examples of the input unit 201 include an operation unit that inputs information according to an operation by being operated, a camera that inputs an image indicating information, and a microphone that inputs sound indicating information. Examples of the operation unit include an operation button and a touch sensor. The information input to the input unit 101 is sent to the arithmetic device 105.

The output unit 202 outputs information and data. Examples of the output unit 202 include a display unit that outputs an image indicating information and a speaker that outputs sound indicating information.

The communication unit 203 transmits and receives information and data. The information and data received by the communication unit 303 are transmitted to the controller 205.

The memory unit 204 memorizes information and data.

The controller 205 controls each unit of the user terminal 20. The controller 205 includes a processor, a memory, and the like. The memory memorizes a program for operating the processor, information and data indicating a processing result of the processor, and the like.

In this example, the memory unit 204 stores terminal information D21, terminal state information D22, and schedule information D23.

### <Terminal information>

The terminal information D21 is information related to the user terminal 20. For example, the terminal information D21 includes a user terminal ID set for the user terminal 20, user terminal performance information indicating performance of the user terminal 20, and the like. The user terminal ID is an example of user terminal identification information for identifying the user terminal 20.

### <Terminal state information>

The terminal state information D22 is information indicating a state of the user terminal 20. The terminal state information D22 includes user terminal position information indicating a position of the user terminal 20, the user terminal communication state information indicating a communication state of the user terminal 20, and the like.

### <Schedule information>

The schedule information D23 indicates an action history and an action plan of the user who owns the user terminal 20. For example, the schedule information D23 indicates a position of the user and a stay period (or a planned stay period) in association with each other. Note that the schedule information D23 can be acquired by a schedule function mounted on the user terminal 20. Specifically, when the user inputs his/her action history and action plan to the user terminal 20 by using the schedule function, the schedule information D23 indicating the action history and action plan of the user is obtained.

### [Client server]

The client server 30 is owned by the client. The client requests calculation of the job data. Examples of such a client include enterprises, research institutions, and educational institutions.

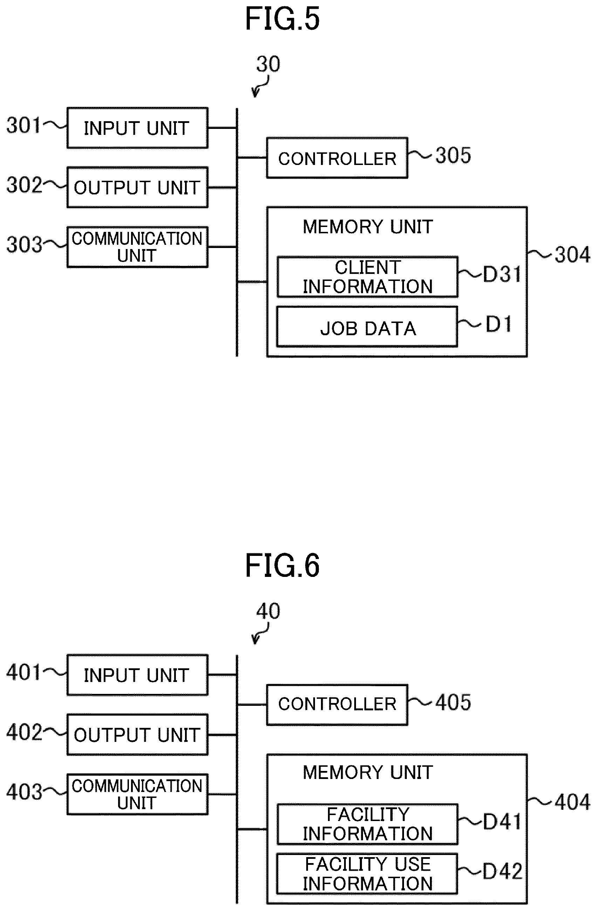

As illustrated in FIG. 5, the client server 30 includes an input unit 301, an output unit 302, a communication unit 303, a memory unit 304, and a controller 305.

The input unit 301 inputs information and data. Examples of the input unit 301 include an operation unit that inputs information according to an operation by being operated, a camera that inputs an image indicating information, and a microphone that inputs sound indicating information. Examples of the operation unit include an operation button, a touch sensor, a keyboard, and a mouse. The information and data input to the input unit 301 are sent to the controller 305.

The output unit 302 outputs information and data. Examples of the output unit 302 include a display unit that outputs an image indicating information and a speaker that outputs sound indicating information.

The communication unit 303 transmits and receives information and data. The information and data received by the communication unit 303 are transmitted to the controller 305.

The memory unit 304 memorizes information and data.

The controller 305 controls each unit of the client server 30. The controller 305 includes a processor, a memory, and the like. The memory memorizes a program for operating the processor, information and data indicating a processing result of the processor, and the like.

In this example, the memory unit 304 memorizes client information D31 and job data D1.

### <Client information>

The client information D31 is information related to the client. The client information D31 includes a client ID set for the client, a client server ID set for the client server 30 owned by the client, the name of a person in charge, an address, a telephone number, and the like. The client ID is an example of client identification information for identifying the client. The client server ID is an example of client server identification information for identifying the client server 30.

### <Job data>

The job data D1 is data corresponding to a job and is data processed for execution of the job.

Note that the job data D1 can be classified by calculation types. Examples of the calculation types include a calculation type of a CPU system and a calculation type of a GPU system. The job data D1 of the calculation type of the CPU system tends to require complicated calculation with many conditional branches, such as simulation calculation. The job data D1 of the calculation type of the GPU system tends to require an enormous amount of simple calculation such as image processing and machine learning.

The job data D1 can be classified by processing conditions. Examples of the processing conditions include a processing condition requiring constant communication, and a processing condition requiring no constant communication. In the job data D1 of the processing condition requiring constant communication, it is required that the arithmetic device 105 is always communicable in the grid computing processing. In the job data D1 of the processing condition requiring no constant communication, it is not required that the arithmetic device 105 is always communicable in the grid computing processing.

### <Job information>

Note that the memory unit 304 may memorize job information related to a job. The job information includes job name information indicating the name of the job, job content information describing the content of the job, job data information related to job data corresponding to the job, job delivery date information indicating a delivery date of the job, and the like. The job data information indicates a calculation type, a processing condition, a necessary calculation capability, and the like of the job data.

### [Facility server]

The facility server 40 is owned by a facility. The user visits the facility. The user can make a visit reservation to the facility. Examples of such a facility include a stadium, a theater, a supermarket, a restaurant, an accommodation facility, and a store.

As illustrated in FIG. 6, the facility server 40 includes an input unit 401, an output unit 402, a communication unit 403, a memory unit 404, and a controller 405. The configurations of the input unit 401, the output unit 402, the communication unit 403, the memory unit 404, and the controller 405 of the facility server 40 are similar to the configurations of the input unit 301, the output unit 302, the communication unit 303, the memory unit 304, and the controller 305 of the client server 30.

In this example, the memory unit 404 stores facility information D41 and facility use information D42.

### <Facility information>

The facility information D41 is information related to the facility. The facility information D41 includes a facility ID set for the facility, a facility server ID set for the facility server 40 owned by the facility, facility position information indicating a position (latitude and longitude) of the facility, the name of a person in charge, an address, a telephone number, and the like. The facility ID is an example of facility identification information for identifying the facility. The facility server ID is an example of facility server identification information for identifying the facility server 40.

### <Facility use information>

The facility use information D42 indicates a use status (a use history and a use plan) of the facility. Specifically, the facility use information D42 indicates the user who visits the facility and a stay period (or a planned stay period) in association with each other.

### [Management server]

The management server 50 manages an operation of the system 1 in which the grid computing is configured. The management server 50 is owned by a company that operates the system 1.

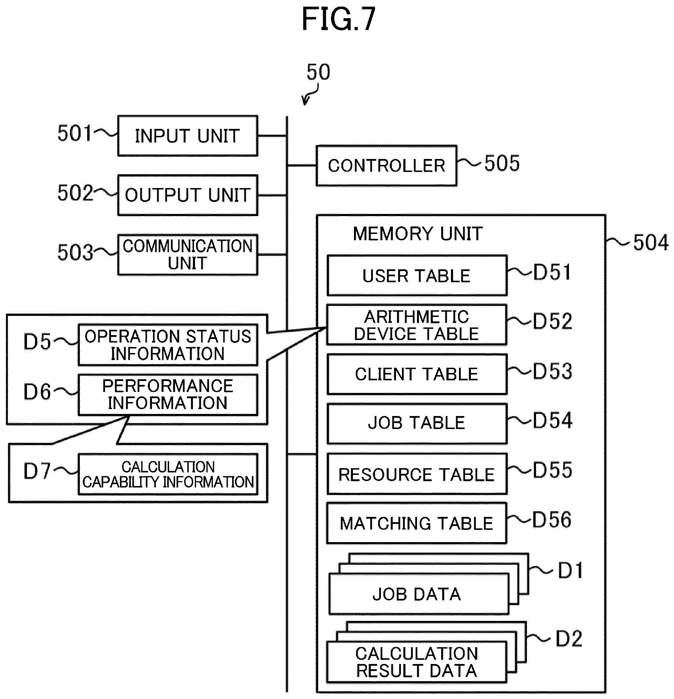

As illustrated in FIG. 7, the management server 50 includes an input unit 501, an output unit 502, a communication unit 503, a memory unit 504, and a controller 505. The configurations of the input unit 501, the output unit 502, the communication unit 503, the memory unit 504, and the controller 505 of the management server 50 are similar to the configurations of the input unit 301, the output unit 302, the communication unit 303, the memory unit 304, and the controller 305 of the client server 30. The memory unit 504 and the controller 505 are examples of components of a management system that manages the grid computing processing.

In this example, the memory unit 504 stores a user table D51, an arithmetic device table D52, a client table D53, a job table D54, a resource table D55, a matching table D56, the job data D1, and calculation result data D2.

### <User table>

The user table D51 is a table for managing users. In the user table D51, for each user, a user ID set for the user, a vehicle ID set for the vehicle 10 owned by the user, an arithmetic device ID set for the arithmetic device 105 owned by the user, a user terminal ID set for the user terminal 20 owned by the user, and the like are registered.

### <Arithmetic device table>

The arithmetic device table D52 is a table for managing the arithmetic device 105. In the arithmetic device table D52, for each arithmetic device 105, an arithmetic device ID set for the arithmetic device 105, a user ID set for a user who owns the arithmetic device 105, a vehicle ID set for the vehicle 10 on which the arithmetic device 105 is mounted, and the like are registered.

In addition, in the arithmetic device table D52, for each arithmetic device 105, the performance (the calculation capability, the ratio between the CPU and the GPU, and the like) of the arithmetic device 105, an operation status (an operation history and an operation plan) of the arithmetic device 105, and the like are registered. In other words, the arithmetic device table D52 includes operation status information D5 indicating the operation status of each of the plurality of arithmetic devices 105 and performance information D6 indicating the performance of each of the plurality of arithmetic devices 105. The performance information D6 includes calculation capability information D7 indicating the calculation capability of each of the plurality of arithmetic devices 105.

### <Client table>

The client table D53 is a table for managing clients. In the client table D53, for each client, a client ID set for the client, a client server ID set for the client server 30 owned by the client, the name of a person in charge, an address, a telephone number, and the like of the client are registered.

### <Job table>

The job table D54 is a table for managing a job requested by the client. In the job table D54, for each job, an acceptance number set for the job, a client ID set for the client who has requested the job, a name and content of the job, and the like are registered. In the job table D54, for each job, a calculation type and a processing condition of job data corresponding to the job, a necessary calculation capability which is a calculation capability required for the calculation of the job data, a delivery date set for the job, and the like are registered.

### <Resource table>

The resource table D55 is a table for managing the calculation capability in the grid computing processing. Specifically, the resource table D55 is a table for managing a result of prediction processing described later. In the resource table D55, for each arithmetic device 105, an arithmetic device ID set for the arithmetic device 105, a prediction result of a temporal change in the calculation capability available in the grid computing processing of the arithmetic device 105, and the like are registered.

### <Matching table>

The matching table D56 is a table for managing a result of matching processing described later. In the matching table D56, for each job, an acceptance number set for the job, job data corresponding to the job, an arithmetic device ID set for the arithmetic device 105 allocated to the job data by the matching processing, and the like are registered.

### <Job data>

The job data D1 memorized in the memory unit 504 is the job data D1 accepted by job acceptance processing described later.

### <Calculation result data>

The calculation result data D2 memorized in the memory unit 504 is job data calculated by the grid computing processing described later, and indicates a result of the calculation.

### [Update of user table]

Next, update of the user table D51 will be described. The user table D51 is updated by the controller 505 of the management server 50.

For example, when a new user joins the system 1, the controller 505 updates the user table D51 by registering information related to the new user in the user table D51.

Specifically, the controller 505 newly sets a user ID for the new user, and registers, in the user table D51, the "user ID" set for the new user, a "vehicle ID" set for the vehicle 10 owned by the user, an "arithmetic device ID" set for the arithmetic device 105 mounted on the vehicle 10, and a "user terminal ID" set for the user terminal 20 owned by the new user in association with each other.

Note that the "vehicle ID" and the "arithmetic device ID" related to the new user can be obtained through communication between the vehicle 10 owned by the new user and the management server 50. In addition, it is possible to obtain a "user terminal ID" related to the new user through communication between the user terminal 20 owned by the new user and the management server 50.

### [Update of arithmetic device table]

Next, update of the arithmetic device table D52 will be described. The arithmetic device table D52 is updated by the controller 505 of the management server 50.

For example, when a new arithmetic device 105 joins the system 1, the controller 505 updates the arithmetic device table D52 by registering information related to the new arithmetic device 105 in the arithmetic device table D52.

Specifically, the controller 505 registers, in the arithmetic device table D52, the "arithmetic device ID" set for the new arithmetic device 105, the "user ID" set for the user who owns the arithmetic device 105, the "vehicle ID" set for the vehicle 10 on which the arithmetic device 105 is mounted, and the "performance" and the "operation status" of the arithmetic device 105 in association with each other.

Note that it is possible to obtain the "arithmetic device ID", the "vehicle ID", the "performance", and the "operation status" related to the new arithmetic device 105 through communication between the vehicle 10 on which the new arithmetic device 105 is mounted and the management server 50. In addition, it is possible to obtain a "user ID" related to the new arithmetic device 105 by referring to the user table D51.

### [Periodic update of arithmetic device table]

The "operation status" of the arithmetic device 105 registered in the arithmetic device table D52 is periodically updated. In other words, the operation status information D5 included in the arithmetic device table D52 is periodically updated. This periodic update is performed by the controller 505 of the management server 50.

### <First update processing>

For example, the "operation status" (in other words, the operation status information D5) of the arithmetic device 105 of the arithmetic device table D52 may be periodically updated on the basis of the "operation history information D15" of the vehicle 10. Specifically, the controller 505 may execute the following first update processing for each arithmetic device 105 registered in the arithmetic device table D52.

In the first update processing, the controller 505 requests the vehicle 10 on which the arithmetic device 105 is mounted for access to the "operation history information D15". The arithmetic device 105 of the vehicle 10 permits access to the "operation history information D15" in response to the request. The controller 505 updates the "operation history" which is a past operation status among the "operation statuses" of the arithmetic device 105 registered in the arithmetic device table D52 on the basis of the operation history of the arithmetic device 105 indicated in the operation history information D15.

### <Second update processing>

The "operation status" (in other words, the operation status information D5) of the arithmetic device 105 of the arithmetic device table D52 may be periodically updated on the basis of the "travel history information D13" of the vehicle 10. Specifically, the controller 505 may execute the following second update processing for each arithmetic device 105 registered in the arithmetic device table D52.

In the second update processing, the controller 505 requests the vehicle 10 on which the arithmetic device 105 is mounted for access to the "travel history information D13". The arithmetic device 105 of the vehicle 10 permits access to the "travel history information D13" in response to the request. The controller 505 estimates the operation history of the arithmetic device 105 on the basis of the travel history of the vehicle 10 indicated in the travel history information D13. Next, the controller 505 updates the "operation history" which is a past operation status among the "operation statuses" of the arithmetic device 105 registered in the arithmetic device table D52 on the basis of the estimated operation history of the arithmetic device 105.

### <Third update processing>

The "operation status" (in other words, the operation status information D5) of the arithmetic device 105 of the arithmetic device table D52 may be periodically updated on the basis of the "schedule information D23" of the user terminal 20. Specifically, the controller 505 may execute the following third update processing for each arithmetic device 105 registered in the arithmetic device table D52.

In the third update processing, the controller 505 requests the user terminal 20 owned by the user who owns the arithmetic device 105 for access to the "schedule information D23". The controller 205 of the user terminal 20 permits access to the "schedule information D23" in response to the request. The controller 505 detects an action status related to the vehicle 10 on which the arithmetic device 105 is mounted from an action status (action history and action plan) of the user indicated in the schedule information D23.

For example, an action history indicating that the user has boarded the vehicle 10 is detected from the action history that is a past action status among the action statuses of the user, and an action plan indicating that the user is planning to board the vehicle 10 is detected from the action plan that is a future action status among the action statuses of the user.

Next, the controller 505 estimates a travel status (travel history and travel plan) of vehicle 10 on the basis of the detected action status of the user. Subsequently, the controller 505 estimates an operation status (operation history and operation plan) of the arithmetic device 105 on the basis of the estimated travel status of the vehicle 10. Then, the controller 505 updates the "operation status" of the arithmetic device 105 registered in the arithmetic device table D52 on the basis of the estimated operation status of the arithmetic device 105.

### <Fourth update processing>

The "operation status" (in other words, the operation status information D5) of the arithmetic device 105 of the arithmetic device table D52 may be periodically updated on the basis of the "facility use information D42" of the facility server 40. Specifically, the controller 505 may execute the following fourth update processing for each arithmetic device 105 registered in the arithmetic device table D52.

In the fourth update processing, the controller 505 requests the facility server 40 for access to the "facility use information D42". The facility server 40 permits access to the "facility use information D42" in response to the request. The controller 505 detects a use status related to the vehicle 10 on which the arithmetic device 105 is mounted from the use statuses (use history and use plan) of the facility indicated in the facility use information D42.

For example, the use history indicating that the user has board the vehicle 10 is detected from the use history which is a past use situation among the use statuses of the facility, and a use plan indicating that the user is planning to board the vehicle 10 is detected from the use plan which is a future use status among the use statuses of the facility.

Next, the controller 505 estimates a travel status (travel history and travel plan) of vehicle 10 on the basis of the detected use status of the facility. Subsequently, the controller 505 estimates an operation status (operation history and operation plan) of the arithmetic device 105 on the basis of the estimated travel status of the vehicle 10. Next, the controller 505 updates the "operation status" of the arithmetic device 105 registered in the arithmetic device table D52 on the basis of the estimated operation status of the arithmetic device 105.

### [Update of client table]

Next, update of the client table D53 will be described. The client table D53 is updated by the controller 505 of the management server 50.

For example, when a new client joins the system 1, the controller 505 updates the client table D53 by registering information related to the new client in the client table D53.

Specifically, the controller 505 newly sets a client ID for the new client, and registers, in the client table D53, the "client ID" set for the new client, a "client server ID" set for the client server 30 owned by the new client, and a "person in charge", an "address", and a "phone number" of the new client in association with each other.

Note that the "client server ID", "person in charge", "address", and "telephone number" related to the new client can be obtained through communication between the client server 30 and the management server 50.

### [Processing (management method) by controller]

The controller 505 performs the job acceptance processing, the prediction processing, the matching processing, and the grid computing processing.

### [Job acceptance processing (job acceptance step)]

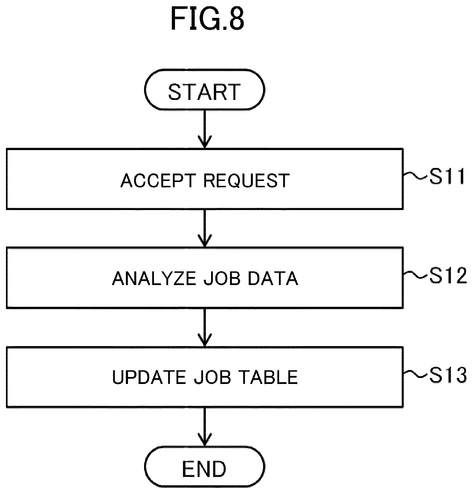

Next, the job acceptance processing will be described with reference to FIG. 8. In the job acceptance processing, the job data D1 requested for calculation by the client is accepted. For example, the controller 505 performs the following processing every time calculation of the job data D1 is requested from the client.

### <Step S11>

First, the management server 50 accepts a job request from a client. Specifically, the client server 30 transmits a job request application to the management server 50 in response to an operation by a person in charge of the client. The controller 505 of the management server 50 performs the following processing in response to the application.

The controller 505 requests the client server 30 to transmit information necessary for acceptance of the job (specifically, client information related to the client who requests the job and job information related to the job). In this example, the controller 505 transmits image data of a job acceptance screen to the client server 30. The controller 305 of the client server 30 reproduces an image of the job acceptance screen from the image data, and causes the output unit 302 (display unit) to output (display) the image.

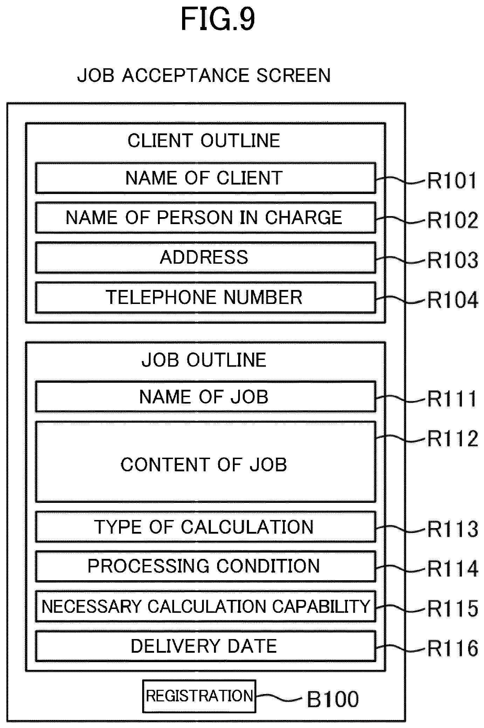

As illustrated in FIG. 9, the job acceptance screen is a screen for inputting information necessary for the job acceptance. The job acceptance screen is provided with a client name input field R101 for inputting a client name, a person-in-charge name input field R102 for inputting the name of a person-in-charge of the client, an address input field R104 for inputting an address of the client, a job name input field R111 for inputting a name of a job, a job content input field R112 for inputting a description related to a content of the job, a calculation type input field R113 for inputting a calculation type of job data corresponding to the job, a processing condition input field R114 for inputting a processing condition of the job data, a necessary calculation capability input field R115 for inputting a necessary calculation capability of the job data, a delivery date input field R116 for inputting a delivery date of the job, and a registration button B100.

The person in charge of the client operates the input unit 301 (operation unit) of the client server 30 to input necessary information for the job acceptance screen. As a result, the client information related to the client who requests the job and the job information related to the job are input. When the input of the above information is completed, the person in charge of the client operates the input unit 301 (operation unit) of the client server 30, and presses the registration button B100 on the job acceptance screen. When the registration button B100 is pressed, the controller 305 of the client server 30 transmits the information (client information and job information) input on the job acceptance screen to the management server 50. The controller 505 of the management server 50 receives the client information and the job information.

Next, the controller 505 requests the client server 30 to transmit the job data D1 corresponding to the job. In response to the request, the controller 305 of the client server 30 transmits the job data D1 corresponding to the job to the management server 50. The controller 505 of the management server 50 receives the job data D1. Then, the controller 505 memorizes the job data D1 in the memory unit 504.

### <Step S12>

Next, the controller 505 of the management server 50 analyzes the job data D1 received in step S11. Specifically, the controller 505 analyzes a calculation type, a processing condition, necessary calculation capability, and the like of the job data D1. Then, the controller 505 corrects the job information received in step S11 on the basis of the analysis result of the job data D1.

When the job information received in step S11 is sufficiently reliable, the processing in step S12 may be skipped.

### <Step S13>

Next, the controller 505 of the management server 50 registers, in the job table D54, the client information received in step S11 and the job information corrected as necessary in step S12 (or the job information received in step S11) in association with each other.

### [Prediction processing (prediction step)]

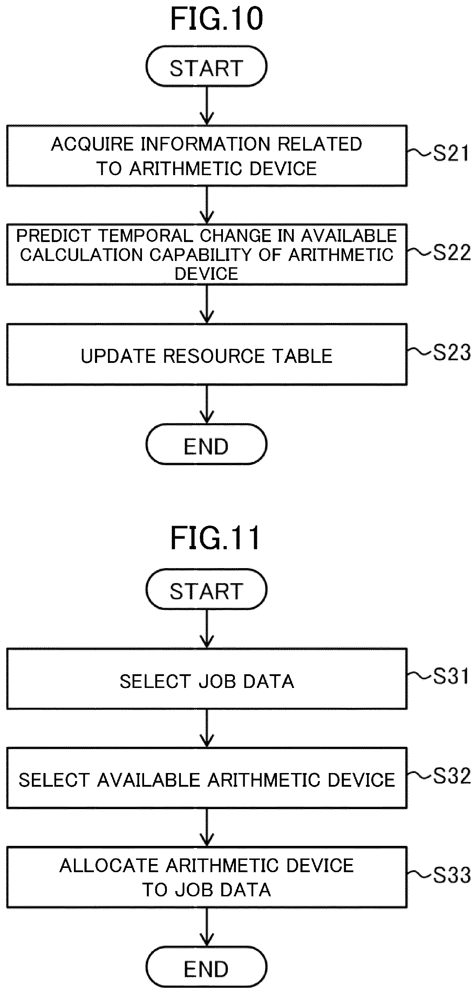

Next, the prediction processing will be described with reference to FIG. 10. In the prediction processing, the calculation capability of the arithmetic device 105 available in the grid computing processing among the plurality of arithmetic devices 105 is predicted on the basis of the arithmetic device table D52 (specifically, the calculation capability information D7 and the operation status information D5) stored in the memory unit 504. For example, when the arithmetic device table D52 (specifically, at least one of the calculation capability information D7 or the operation status information D5) memorized in the memory unit 504 is updated, the controller 505 performs the following processing.

### <Step S21>

First, the controller 505 acquires the "calculation capability" and the "operation status" of the arithmetic device 105 registered in the arithmetic device table D52. In other words, the controller 505 acquires the calculation capability information D7 and the operation status information D5 included in the arithmetic device table D52.

### <Step S22>

Next, the controller 505 predicts, for each arithmetic device 105, a temporal change in the calculation capability available in the grid computing processing of the arithmetic device 105 on the basis of the calculation capability of the arithmetic device 105 indicated in the calculation capability information D7 and the operation status of the arithmetic device 105 indicated in the operation status information D5.

Specifically, the controller 505 predicts a tendency (pattern) of a change in the use rate of the calculation capability of the arithmetic device 105 from the operation status of the arithmetic device 105 indicated in the operation status information D5. The prediction of the tendency of the change in the use rate of the calculation capability of the arithmetic device 105 may be implemented by machine learning. Note that the "use rate of the calculation capability of the arithmetic device 105" described above is a utilization rate of the calculation capability of the arithmetic device 105 for a purpose other than the use for the grid computing processing. Examples of such other purposes of use include traveling of the vehicle 10 and control of various functions of the vehicle 10. Then, on the basis of the tendency of the change in the use rate of the calculation capability of the arithmetic device 105, the controller 505 predicts a period in which there is a margin in the calculation capability of the arithmetic device 105 (period in which the use rate of the calculation ability is not 100%), and sets the period as a "period in which the calculation capability of the arithmetic device 105 can be used for the grid computing processing". For example, the controller 505 sets a period in which the use rate of the calculation capability of the arithmetic device 105 is "30%" as a period in which "70%" of the calculation capability of the arithmetic device 105 can be used in the grid computing processing.

### <Step S23>

Next, for each arithmetic device 105, the controller 505 registers, in the resource table D55, the temporal change in the calculation capability available in the grid computing processing of the arithmetic device 105 predicted in step S22. As a result, the resource table D55 is updated.

### [Matching processing (matching step)]

Next, the matching processing will be described with reference to FIG. 11. The matching processing is processing of allocating the arithmetic device 105 available in the grid computing processing among the plurality of arithmetic devices 105 to the job data D1 accepted in the acceptance processing on the basis of the prediction result of the prediction processing. For example, the controller 505 performs the following processing after completion of the job acceptance processing.

### <Step S31>

First, the controller 505 selects a job to be subjected to the matching processing from the jobs registered in the job table D54. Then, the controller 505 selects the job data D1 corresponding to the job to be subjected to the matching processing from the job data D1 memorized in the memory unit 504.

### <Step S32>

Next, the controller 505 selects the arithmetic device 105 available in the grid computing processing for the job data D1 selected in step S31 from the plurality of arithmetic devices 105 on the basis of the prediction result of the temporal change in the calculation capability available in the grid computing processing of each of the plurality of arithmetic devices 105 registered in the resource table D55.

Specifically, the controller 505 determines a calculation planned period in which the grid computing processing for the job data D1 is executed, and detects the arithmetic device 105 capable of providing the calculation capability in the calculation planned period from the plurality of arithmetic devices 105. Then, the controller 505 selects the arithmetic device 105 to be allocated to the job data D1 from the arithmetic devices 105 capable of providing the calculation capability in the calculation planned period such that a "total of the calculation capabilities provided to the grid computing processing" is equal to or greater than the "calculation capability required for calculation of the job data D1 in the grid computing processing".

### <Step S33>

Next, the controller 505 allocates the arithmetic device 105 selected in step S32 to the job data D1 selected in step S31. Then, the controller 505 registers, in the matching table D56, matching result information indicating which arithmetic device 105 is allocated to which job data D1.

### [Grid computing processing]

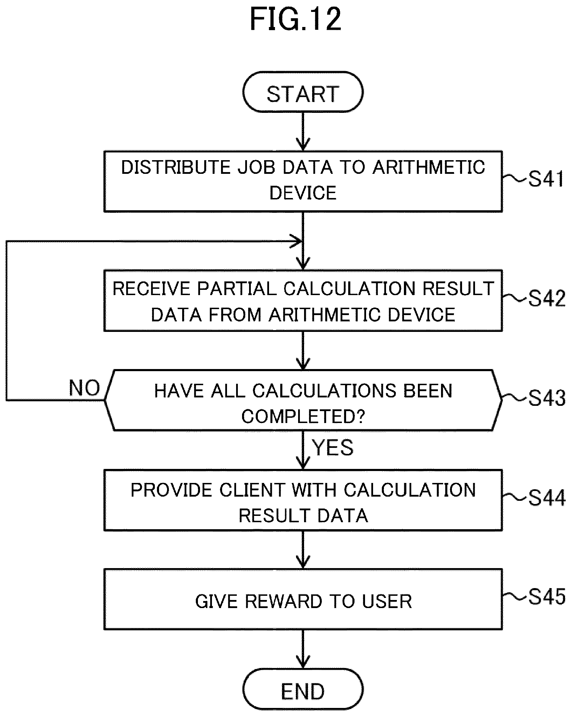

Next, the grid computing processing will be described with reference to FIG. 12. In the grid computing processing, the available arithmetic device 105 among the plurality of arithmetic devices 105 is caused to process the job data D1. For example, the controller 505 performs the following processing after completion of the matching processing.

### <Step S41>

First, the controller 505 refers to the matching table D56 and distributes the job data D1 to be subjected to the grid computing processing to the arithmetic devices 105 allocated to the job data D1 in the matching processing. Specifically, the controller 505 transmits a part of the job data D1 to each of the arithmetic devices 105 allocated to the job data D1. As a result, the job data D1 is processed in parallel by the arithmetic devices 105 allocated to the job data D1.

### <Step S42>

Next, when the calculation of the data (a part of the job data D1) transmitted to the arithmetic device 105 is completed, each of the arithmetic devices 105 transmits partial calculation result data obtained by the calculation to the management server 50. The controller 505 of the management server 50 receives the partial calculation result data transmitted from the arithmetic device 105, and memorizes the partial calculation result data in the memory unit 504.

### <Step S43>

The controller 505 determines whether all the arithmetic devices 105 to which the job data D1 has been distributed in step S41 have completed the calculation. In a case where all the arithmetic devices 105 have completed the calculation, the processing of step S44 is performed, and otherwise, the processing of step S42 is performed.

### <Step S44>

When all the arithmetic devices 105 have completed the calculation, the controller 505 combines the partial calculation result data memorized in the memory unit 504 to generate calculation result data D2 (calculation result data D2 indicating a result of the calculation of the job data D1) corresponding to the job data D1 to be subjected to the grid computing processing. Then, the controller 505 transmits the calculation result data D2 corresponding to the job data D1 to be subjected to the grid computing processing to the client server 30 of the client who has requested the calculation of the job data D1.

### <Step S45>

Next, a reward is given from the company operating the system 1 to the user who has provided the calculation capability of the arithmetic device 105 to the grid computing processing. Examples of the reward given to the user include points available in the system 1, virtual currency, and a product discount benefit. For example, the controller 505 of the management server 50 performs processing for giving a reward to the user who has provided the calculation capability of the arithmetic device 105 to the grid computing processing. Examples of the processing for giving a reward include processing of registering a "user ID" set for the user and a "point" (or virtual currency) available in the system 1 in association with each other in the user table D51, and processing of transmitting information indicating a discount benefit of a product to the user terminal 20 owned by the user. Note that information indicating the reward may be registered for each job in the job table D54.

Alternatively, a reward may be given from the client to the user who has provided the calculation capability of the arithmetic device 105 to the grid computing processing. For example, the controller 305 of the client server 30 may execute processing for giving a reward to the user who has provided the calculation capability of the arithmetic device 105 to the grid computing processing.

### [Confirmation of progress of job]

Note that, in this example, when confirmation of a processing progress of a job is requested from the client server 30 of the client who has requested the job, the controller 505 of the management server 50 transmits image data of a confirmation screen for confirming the processing progress of the job to the client server 30 in response to the request. The client server 30 reproduces an image of the confirmation screen from the image data, and causes the output unit 302 (display unit) to output (display) the image.

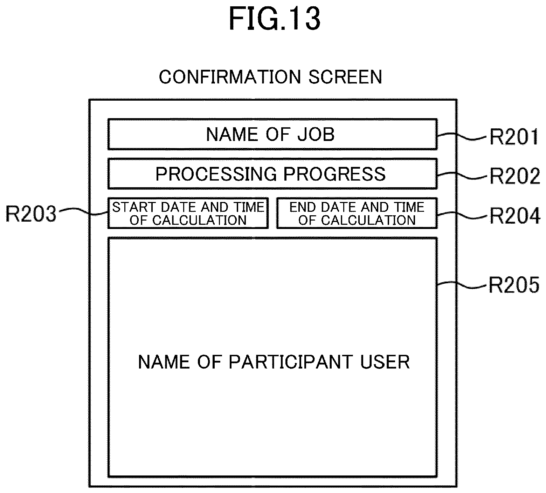

As illustrated in FIG. 13, the confirmation screen is provided with a job name display field R201 that displays the name of the job, a processing progress display field R202 that displays the processing progress of the job, a calculation start date and time display field R203 that indicates the date and time when the processing of the job is started, a calculation end date and time display field R204 that indicates the date and time when the processing of the job ends, and a participant user display field R205 that indicates a user who provides the calculation capability of the arithmetic device 105 for the grid computing processing for the job.

### [Effects of embodiment]

As described above, in the system 1 according to the embodiment, the calculation capability of the grid computing can be provided to the client.

In addition, giving a reward to the user who has provided the calculation capability of the arithmetic device 105 to the grid computing can promote provision of the calculation capability of the arithmetic device 105 to the grid computing. It is therefore possible to facilitate ensuring of the calculation capability of the grid computing.

### (Modification 1 of embodiment)

Note that the matching processing may be performed in consideration of the calculation type of the job data D1.

In Modification 1 of the embodiment, in the matching processing, the controller 505 allocates, to the job data D1, the arithmetic device 105 that can be used in the grid computing processing among the plurality of arithmetic devices 105 and has performance corresponding to the calculation type of the job data D1.

The above configuration allows the arithmetic device 105 to be appropriately allocated to the job data D1 in accordance with the calculation type of the job data D1. For example, the arithmetic device 105 in which the ratio of the CPU is higher than the ratio of the GPU can be allocated to the job data D1 of the calculation type of the CPU system. In addition, the arithmetic device 105 in which the ratio of the GPU is higher than the ratio of the CPU can be allocated to the job data D1 of the calculation type of the GPU system.

### (Modification 2 of embodiment)

The matching processing may be performed in consideration of an execution condition of the job data D1.

In Modification 2 of the embodiment, in the matching processing, the controller 505 allocates, to the job data D1, the arithmetic device 105 that can be used in the grid computing processing and has performance corresponding to the execution condition of the job data D1 among the plurality of arithmetic devices 105.

The above configuration allows the arithmetic device 105 to be appropriately allocated to the job data D1 in accordance with the execution condition of the job data D1. For example, the arithmetic device 105 capable of continuous communication can be allocated to the job data D1 of the processing condition requiring continuous communication. In addition, the arithmetic device 105 incapable of continuous communication can be allocated to the job data D1 of the processing condition requiring no continuous communication.

### (Modification 3 of embodiment)

The matching processing may be performed in consideration of the delivery date of the job data D1.

In Modification 3 of the embodiment, the controller 505 allocates the arithmetic device 105 available in the grid computing processing among the plurality of arithmetic devices 105 to the job data D1 so that the grid computing processing on the job data D1 is completed by the delivery date set for the job data D1 in the matching processing.

The above configuration allows the arithmetic device 105 to be appropriately allocated to the job data D1 in accordance with the delivery date of the job data D1.

### (Claimed Invention)

According to the claimed invention, the matching processing is performed in consideration of a communication state of the arithmetic device 105 (specifically, the communication state of the vehicle 10 on which the arithmetic device 105 is mounted).

According to the claimed invention, the controller 505 monitors a quality of the communication state of the arithmetic device 105 for each arithmetic device 105, and predicts (learns) the temporal change in the quality of the communication state of the arithmetic device 105 from a history of the communication state of the arithmetic device 105. Then, in the matching processing, the controller 505 allocates, to the job data D1, the arithmetic device 105 that can be used in the grid computing processing and has the quality of the communication state exceeding a predetermined quality among the plurality of arithmetic devices 105.

The claimed invention allows the arithmetic device 105 to be appropriately allocated to the job data D1 in accordance with the quality of the communication state of the arithmetic device 105.

### (Modification 5 of embodiment)

The matching processing may be performed in consideration of the remaining level of the battery of the vehicle 10 on which the arithmetic device 105 is mounted.

In Modification 5 of the embodiment, the controller 505 monitors the remaining level of the battery of the vehicle 10 for each vehicle 10, and predicts (learns) the temporal change in the remaining level of the battery of the vehicle 10 from a history of the remaining level of the battery of the vehicle 10. Then, in the matching processing, the controller 505 allocates, to the job data D1, the arithmetic device 105 that can be used in the grid computing processing and is mounted on the vehicle 10 having the remaining level of the battery of the vehicle 10 exceeding a predetermined level among the plurality of arithmetic devices 105.

The above configuration allows the arithmetic device 105 to be appropriately allocated to the job data D1 in accordance with the remaining level of the battery of the vehicle 10 on which the arithmetic device 105 is mounted.

### (Modification 6 of embodiment)

The matching processing may be performed in consideration of whether the vehicle 10 on which the arithmetic device 105 is mounted is parked.

In Modification 6 of the embodiment, the controller 505 monitors the position of the vehicle 10 for each vehicle 10, and predicts (learns) a parking period of the vehicle 10 from a history of the position of the vehicle 10. Then, in the matching processing, the controller 505 allocates, to the job data D1, the arithmetic device 105 that can be used in the grid computing processing and is mounted on the vehicle 10 that is parked among the plurality of arithmetic devices 105.

The above configuration allows the arithmetic device 105 to be appropriately allocated to the job data D1 in accordance with whether the vehicle 10 on which the arithmetic device 105 is mounted is parked.

### (Modification 7 of embodiment)

The matching processing may be performed in consideration of whether the vehicle 10 on which the arithmetic device 105 is mounted is being charged in the charging facility.

**In** Modification 7 of the embodiment, the controller 505 monitors presence or absence of charge of the vehicle 10 (charge in the charging facility) for each vehicle 10, and predicts (learns) a charge period of the vehicle 10 from the history of the presence or absence of charge of the vehicle 10. Then, in the matching processing, the controller 505 allocates, to the job data D1, the arithmetic device 105 that can be used in the grid computing processing and is mounted on the vehicle 10 that is being charge in the charging facility among the plurality of arithmetic devices 105.

The above configuration allows the arithmetic device 105 to be appropriately allocated to the job data **D1** in accordance with whether the vehicle 10 on which the arithmetic device 105 is mounted is being charged in the charging facility.

### (Other embodiments)

**In** the above description, a case where the memory unit 504 and the controller 505 of the management system are aggregated into a single management server 50 has been described as an example, but this case is not restrictive. For example, the memory unit 504 and the controller 505 may be distributed to a plurality of management servers 50 (not shown) that communicate with each other via the communication network 5.

**In** addition, in the above description, the memory unit 504 of the management system may be configured by a single memory device or may be configured by a plurality of memory devices. The plurality of memory devices may be aggregated into a single management server 50 or may be distributed to a plurality of management servers 50 (not shown) that communicate with each other via the communication network 5.

Furthermore, in the above description, the controller 505 of the management system may be configured by a single control unit or may be configured by a plurality of control units. The plurality of control units may be aggregated into a single management server 50 or may be distributed to a plurality of management servers 50 (not shown) that communicate with each other via the communication network 5.

Furthermore, in the above description, the arithmetic device 105 may be configured by a single arithmetic unit or may be configured by a plurality of arithmetic units. The plurality of arithmetic units may be aggregated into a single management server 50 or may be distributed to a plurality of management servers 50 (not shown) that communicate with each other via the communication network 5.

In the above description, a case where the arithmetic device 105 is mounted on the vehicle 10 (specifically, a four-wheeled vehicle) has been described as an example, but this case is not restrictive. For example, the arithmetic device 105 may be mounted on another moving body other than the vehicle 10. Examples of such a moving body include a transport machine and a mobile information terminal. Examples of the transport machine include a motorcycle, a railway vehicle, a ship, an aircraft, and a drone. The vehicle is an example of a transport machine. Examples of the mobile information terminal include a laptop personal computer, a tablet, and a smartphone.

In the above description, not only the calculation capability of the arithmetic device 105 mounted on the vehicle 10 but also the calculation capability of another arithmetic device (not shown) may be supplied to the grid computing processing. Such another arithmetic device may be a stationary arithmetic device (for example, a desktop personal computer).

In addition, the above embodiments may be appropriately combined and implemented. The above embodiments are inherently preferable examples, and are not intended to limit the scope of the technology disclosed herein, the application of the technology, or the use of the technology.

### Industrial Applicability

As described above, the technology disclosed herein is useful as a technology for managing the grid computing.

### Reference Signs List

- 1: system
- 10: vehicle
- 105: arithmetic device
- 20: user terminal
- 30: client server
- 40: facility server
- 50: management server
- 501: input unit
- 502: output unit
- 503: communication unit
- 504: memory unit
- 505: controller
- D1: job data
- D2: calculation result data

## Claims

1. A management system that manages grid computing processing of causing an arithmetic device (105) that is available among a plurality of arithmetic devices (105), each of which is mounted on a vehicle (10), enters an operation state when the vehicle (10) is traveling, and enters a stop state when a power supply of the vehicle (10) is turned off, to process job data, the management system comprising:
a memory unit (504) of a management server (50); and
a controller (505) of the management server (50), wherein
the memory unit (504) memorizes calculation capability information indicating a calculation capability of each of the plurality of arithmetic devices (105) and operation status information indicating an operation status of each of the plurality of arithmetic devices (105), and
the controller (505) performs
job acceptance processing of accepting the job data requested for calculation by a client,
prediction processing of predicting a temporal change in the calculation capability available in the grid computing processing of each of the plurality of arithmetic devices (105) on a basis of the calculation capability information and the operation status information, and
matching processing of allocating the arithmetic device (105) available in the grid computing processing among the plurality of arithmetic devices (105) to the job data accepted in the job acceptance processing on a basis of a result of the prediction processing,
wherein the controller (505) is further configured to
monitor quality of a communication state of the arithmetic device (105) for each arithmetic device (105), and predict a temporal change in the quality of the communication state of the arithmetic device (105) from a history of the communication state of the arithmetic device (105),
in the matching processing, allocate, an arithmetic device (105) in the grid computing processing among the plurality of arithmetic devices (105) based on the quality of the communication state of the arithmetic device (105) exceeding a predetermined quality and based on the predicted temporal change in the quality of the communication state of the arithmetic device (105).

2. The management system according to claim 1, wherein,
in the matching processing, the controller (505) allocates, to the job data, the arithmetic device (105) that is available in the grid computing processing among the plurality of arithmetic devices (105) and has performance corresponding to a calculation type of the job data.

3. The management system according to claim 1, wherein,
in the matching processing, the controller (505) allocates, to the job data, the arithmetic device (105) that is available in the grid computing processing among the plurality of arithmetic devices (105) and has performance corresponding to an execution condition of the job data.

4. The management system according to any one of claims 1 to 3, wherein,
in the matching processing, the controller (505) allocates, to the job data, the arithmetic device (105) that is available in the grid computing processing among the plurality of arithmetic devices (105) so that the grid computing processing on the job data is completed until a delivery date set for the job data.

5. A management method of managing, by a management server (50) comprising a controller (505) and a memory unit (504), grid computing processing of causing an arithmetic device (105) that is available among a plurality of arithmetic devices (105), each of which is mounted on a vehicle (10), enters an operation state when the vehicle (10) is traveling, and enters a stop state when a power supply of the vehicle (10) is turned off, to process job data, the management method comprising:
a job acceptance step of accepting, by the controller (505), the job data requested for calculation by a client;
a prediction step of predicting, by the controller (505), a temporal change in a calculation capability available in the grid computing processing of each of the plurality of arithmetic devices (105) on a basis of calculation capability information indicating the calculation capability of each of the plurality of arithmetic devices (105) and operation status information indicating an operation status of each of the plurality of arithmetic devices (105), the calculation capability information and the operation status information being stored in the memory unit (504); and
a matching step of allocating, by the controller (505), the arithmetic device (105) that is available in the grid computing processing among the plurality of arithmetic devices (105) to the job data accepted in the job acceptance step on a basis of a result of the predicting step,
the management method further comprising:
monitoring quality of a communication state of the arithmetic device (105) for each arithmetic device (105), and predicting a temporal change in the quality of the communication state of the arithmetic device (105) from a history of the communication state of the arithmetic device (105),
in the matching step, allocating, an arithmetic device (105) in the grid computing processing among the plurality of arithmetic devices (105) based on the quality of the communication state of the arithmetic device (105) exceeding a predetermined quality and based on the predicted temporal change in the quality of the communication state of the arithmetic device (105).

## Patentansprüche

1. Verwaltungssystem, das eine Grid-Computing-Verarbeitung verwaltet, zum Veranlassen einer Arithmetikvorrichtung (105), die unter einer Vielzahl von Arithmetikvorrichtungen (105) verfügbar ist, die jeweils auf einem Fahrzeug (10) montiert sind, in einen Betriebszustand wechselt, wenn das Fahrzeug (10) fährt, und in einen Stoppzustand wechselt, wenn eine Leistungsversorgung des Fahrzeugs (10) abgeschaltet wird, um Auftragsdaten zu verarbeiten, das Verwaltungssystem umfassend:
eine Speichereinheit (504) eines Verwaltungsservers (50); und
eine Steuerung (505) des Verwaltungsservers (50), wobei
die Speichereinheit (504) Berechnungsfähigkeitsinformationen, die eine Berechnungsfähigkeit jeder der Vielzahl von Arithmetikvorrichtungen (105) angeben, und Betriebsstatusinformationen speichert, die einen Betriebsstatus jeder der Vielzahl von Arithmetikvorrichtungen (105) angeben, und
die Steuerung (505) durchführt
Auftragsannahmeverarbeitung zum Annehmen der Auftragsdaten, die durch den Kunden für eine Berechnung angefordert werden,
Vorhersageverarbeitung zum Vorhersagen einer zeitlichen Änderung in der Berechnungsfähigkeit, die in der Grid-Computing-Verarbeitung jeder der Vielzahl von Arithmetikvorrichtungen (105) verfügbar ist, auf einer Basis der Berechnungsfähigkeitsinformationen und der Betriebsstatusinformationen,
und
Abgleichverarbeitung zum Zuweisen der Arithmetikvorrichtung (105), die in der Grid-Computing-Verarbeitung verfügbar ist, unter der Vielzahl von Arithmetikvorrichtungen (105), zu den Auftragsdaten, die in der Auftragsannahmeverarbeitung angenommen werden, auf einer Basis eines Ergebnisses der Vorhersageverarbeitung,
wobei die Steuerung (505) ferner konfiguriert ist zum
Überwachen von Qualität eines Kommunikationszustands der Arithmetikvorrichtung (105) für jede Arithmetikvorrichtung (105) und Vorhersagen einer zeitlichen Änderung in der Qualität des Kommunikationszustands der Arithmetikvorrichtung (105) aus einer Historie des Kommunikationszustands der Arithmetikvorrichtung (105),
bei der Abgleichverarbeitung, Zuweisen einer Arithmetikvorrichtung (105) in der Grid-Computing-Verarbeitung unter der Vielzahl von Arithmetikvorrichtungen (105) basierend darauf, ob die Qualität des Kommunikationszustands der Arithmetikvorrichtung (105) eine zuvor bestimmte Qualität überschreitet, und basierend auf der vorhergesagten zeitlichen Änderung in der Qualität des Kommunikationszustands der Arithmetikvorrichtung (105).

2. Verwaltungssystem nach Anspruch 1, wobei,
bei der Abgleichverarbeitung, die Steuerung (505) den Auftragsdaten die Arithmetikvorrichtung (105) zuweist, die in der Grid-Computing-Verarbeitung unter der Vielzahl von Arithmetikvorrichtungen (105) verfügbar ist und eine Leistung aufweist, die einem Berechnungstyp der Auftragsdaten entspricht.

3. Verwaltungssystem nach Anspruch 1, wobei,
bei der Abgleichverarbeitung, die Steuerung (505) den Auftragsdaten die Arithmetikvorrichtung (105) zuweist, die in der Grid-Computing-Verarbeitung unter der Vielzahl von Arithmetikvorrichtungen (105) verfügbar ist und eine Leistung aufweist, die einer Ausführungsbedingung der Auftragsdaten entspricht.

4. Verwaltungssystem nach einem der Ansprüche 1 bis 3, wobei,
bei der Abgleichverarbeitung, die Steuerung (505) den Auftragsdaten die Arithmetikvorrichtung (105) zuweist, die in der Grid-Computing-Verarbeitung unter der Vielzahl von Arithmetikvorrichtungen (105) verfügbar ist, so dass die Grid-Computing-Verarbeitung an den Auftragsdaten bis zu einem Lieferdatum abgeschlossen ist, das für die Auftragsdaten festgelegt ist.

5. Verwaltungsverfahren zum Verwalten, durch einen Verwaltungsserver (50), umfassend eine Steuerung (505) und eine Speichereinheit (504), einer Grid-Computing-Verarbeitung zum Veranlassen einer Arithmetikvorrichtung (105), die unter einer Vielzahl von Arithmetikvorrichtungen (105) verfügbar ist, die jeweils auf einem Fahrzeug (10) montiert sind, in einen Betriebszustand wechselt, wenn das Fahrzeug (10) fährt, und in einen Stoppzustand wechselt, wenn eine Leistungsversorgung des Fahrzeugs (10) abgeschaltet wird, um Auftragsdaten zu verarbeiten, das Verwaltungsverfahren umfassend:
einen Auftragsannahmeschritt zum Annehmen, durch die Steuerung (505), der Auftragsdaten, die durch den Kunden für die Berechnung angefordert werden;
einen Vorhersageschritt zum Vorhersagen, durch die Steuerung (505), einer zeitlichen Änderung in der Berechnungsfähigkeit, die in der Grid-Computing-Verarbeitung jeder der Vielzahl von Arithmetikvorrichtungen (105) verfügbar ist, auf einer Basis von Berechnungsfähigkeitsinformationen, die eine Berechnungsfähigkeit jeder der Vielzahl von Arithmetikvorrichtungen (105) angeben, und Betriebsstatusinformationen, die einen Betriebsstatus jeder der Vielzahl von Arithmetikvorrichtungen (105) angeben, wobei die Berechnungsfähigkeitsinformationen und die Betriebsstatusinformationen in der Speichereinheit (504) gespeichert sind; und
einen Abgleichschritt zum Zuweisen, durch die Steuerung (505), der Arithmetikvorrichtung (105), die in der Grid-Computing-Verarbeitung verfügbar ist, unter der Vielzahl von Arithmetikvorrichtungen (105), zu den Auftragsdaten, die in dem Auftragsannahmeschritt angenommen werden, auf einer Basis eines Ergebnisses des Vorhersageschritts,
das Verwaltungsverfahren ferner umfassend:
Überwachen von Qualität eines Kommunikationszustands der Arithmetikvorrichtung (105) für jede Arithmetikvorrichtung (105) und Vorhersagen einer zeitlichen Änderung in der Qualität des Kommunikationszustands der Arithmetikvorrichtung (105) aus einer Historie des Kommunikationszustands der Arithmetikvorrichtung (105),
in dem Abgleichschritt, Zuweisen einer Arithmetikvorrichtung (105) in der Grid-Computing-Verarbeitung unter der Vielzahl von Arithmetikvorrichtungen (105) basierend darauf, ob die Qualität des Kommunikationszustands der Arithmetikvorrichtung (105) eine zuvor bestimmte Qualität überschreitet, und basierend auf der vorhergesagten zeitlichen Änderung in der Qualität des Kommunikationszustands der Arithmetikvorrichtung (105).

## Revendications

1. Système de gestion qui gère un traitement de calcul en grille consistant à faire en sorte qu'un dispositif arithmétique (105) qui est disponible parmi une pluralité de dispositifs arithmétiques (105), dont chacun est monté sur un véhicule (10), entre dans un état de fonctionnement lorsque le véhicule (10) se déplace, et entre dans un état d'arrêt lorsqu'une alimentation électrique du véhicule (10) est mise en tension, pour traiter des données de tâche, le système de gestion comprenant :
une unité de mémoire (504) d'un serveur de gestion (50) ; et
un dispositif de commande (505) du serveur de gestion (50), dans lequel
l'unité de mémoire (504) mémorise des informations de capacité de calcul indiquant la capacité de calcul de chacun de la pluralité de dispositifs arithmétiques (105) et des informations d'état de fonctionnement indiquant un état de fonctionnement de chacun de la pluralité de dispositifs arithmétiques (105), et
le dispositif de commande (505) réalise
un traitement d'acceptation de tâche consistant à accepter des données de tâche dont le calcul est demandé par un client,
un traitement de prédiction consistant à prédire un changement temporel dans la capacité de calcul disponible lors du traitement de calcul en grille de chacun de la pluralité de dispositifs arithmétiques (105) sur la base des informations de capacité de calcul et des informations d'état de fonctionnement, et
un traitement de mise en correspondance consistant à attribuer le dispositif arithmétique (105), disponible lors du traitement de calcul en grille parmi la pluralité de dispositifs arithmétiques (105), aux données de tâche acceptées lors du traitement d'acceptation de tâche sur la base d'un résultat du traitement de prédiction,
dans lequel le dispositif de commande (505) est en outre configuré pour
surveiller une qualité d'un état de communication du dispositif arithmétique (105) pour chaque dispositif arithmétique (105) et prédire un changement temporel dans la qualité de l'état de communication du dispositif arithmétique (105) à partir d'un historique de l'état de communication du dispositif arithmétique (105),
lors du traitement de mise en correspondance, attribuer un dispositif arithmétique (105) lors du traitement de calcul en grille parmi la pluralité de dispositifs arithmétiques (105) sur la base de la qualité de l'état de communication du dispositif arithmétique (105) dépassant une qualité prédéterminée et sur la base du changement temporel prédit dans la qualité de l'état de communication du dispositif arithmétique (105).

2. Système de gestion selon la revendication 1, dans lequel,
lors du traitement de mise en correspondance, le dispositif de commande (505) attribue, aux données de tâche, le dispositif arithmétique (105) qui est disponible lors du traitement de calcul en grille parmi la pluralité de dispositifs arithmétiques (105) et dont les performances correspondent à un type de calcul des données de tâche.

3. Système de gestion selon la revendication 1, dans lequel,
lors du traitement de mise en correspondance, le dispositif de commande (505) attribue, aux données de tâche, le dispositif arithmétique (105) qui est disponible lors du traitement de calcul en grille parmi la pluralité de dispositifs arithmétiques (105) et dont les performances correspondent à une condition d'exécution des données de tâche.

4. Système de gestion selon l'une quelconque des revendications 1 à 3, dans lequel,
lors du traitement de mise en correspondance, le dispositif de commande (505) attribue, aux données de tâche, le dispositif arithmétique (105) qui est disponible lors du traitement de calcul en grille parmi la pluralité de dispositifs arithmétiques (105), de sorte que le traitement de calcul en grille sur les données de tâche est achevé jusqu'à une date de livraison fixée pour les données de tâche.

5. Procédé de gestion consistant à gérer, par un serveur de gestion (50) comprenant un dispositif de commande (505) et une unité de mémoire (504), un traitement de calcul en grille consistant à faire en sorte qu'un dispositif arithmétique (105) qui est disponible parmi une pluralité de dispositifs arithmétiques (105), dont chacun est monté sur un véhicule (10), entre dans un état de fonctionnement lorsque le véhicule (10) se déplace, et entre dans un état d'arrêt lorsqu'une alimentation électrique du véhicule (10) est mise hors tension, pour traiter des données de tâche, le procédé de gestion comprenant :
une étape d'acceptation de tâche consistant à accepter, par le dispositif de commande (505), les données de tâche dont le calcul est demandé par un client ;
une étape de prédiction consistant à prédire, par le dispositif de commande (505), un changement temporel dans une capacité de calcul disponible lors du traitement de calcul en grille de chacun de la pluralité de dispositifs arithmétiques (105) sur la base d'informations de capacité de calcul indiquant la capacité de calcul de chacun de la pluralité de dispositifs arithmétiques (105) et d'informations d'état de fonctionnement indiquant un état de fonctionnement de chacun de la pluralité de dispositifs arithmétiques (105), les informations de capacité de calcul et les informations d'état de fonctionnement étant stockées dans l'unité de mémoire (504) ; et
une étape de mise en correspondance consistant à attribuer, par le dispositif de commande (505), le dispositif arithmétique (105) qui est disponible lors du traitement de calcul en grille parmi la pluralité de dispositifs arithmétiques (105) aux données de tâche acceptées lors de l'étape d'acceptation de tâche sur la base d'un résultat de l'étape de prédiction,
le procédé de gestion comprenant en outre :
la surveillance d'une qualité d'un état de communication du dispositif arithmétique (105) pour chaque dispositif arithmétique (105), et la prédiction d'un changement temporel dans la qualité de l'état de communication du dispositif arithmétique (105) à partir d'un historique de l'état de communication du dispositif arithmétique (105),
lors de l'étape de mise en correspondance, l'attribution d'un dispositif arithmétique (105) lors du traitement de calcul en grille parmi la pluralité de dispositifs arithmétiques (105) sur la base de la qualité de l'état de communication du dispositif arithmétique (105) dépassant une qualité prédéterminée et sur la base du changement temporel prédit dans la qualité de l'état de communication du dispositif arithmétique (105).
